# EUROPÄISCHE PATENTSCHRIFT

(11) **EP 3 529 114 B1**
(45) Veröffentlichungstag und Bekanntmachung des Hinweises auf die Patenterteilung: **10.11.2021**
(21) Anmeldenummer: 17769098.9
(22) Anmeldetag: 20.09.2017
(51) Int. Cl.: B60T 8/36, F16K 31/06

(54) **MAGNETVENTIL ZUR STEUERUNG DES BREMSDRUCKS EINER RADBREMSE UND WERKZEUG ZUR HERSTELLUNG SEINES VENTILELEMENTS**
SOLENOID VALVE FOR CONTROLLING THE BRAKING PRESSURE OF A WHEEL BRAKE AND TOOL FOR PRODUCING ITS VALVE ELEMENT
ÉLECTROVANNE POUR COMMANDER LA PRESSION DE FREINAGE D'UN FREIN DE ROUE ET OUTIL POUR FABRIQUER UN ÉLÉMENT DE VANNE

(30) Priorität: 18.10.2016 DE 102016220348
(43) Veröffentlichungstag der Anmeldung: 28.08.2019
(73) Patentinhaber: Robert Bosch GmbH, 70442 Stuttgart (DE)
(72) Erfinder: ERTLE, Marcus, 87509 Immenstadt (DE); LANDESFEIND, Klaus, 71522 Backnang (DE); NORBERG, Jens, 70378 Stuttgart (DE); STEINGASS, Stephan, Suzhou 215021 (CN); WEITZE, Thomas, Charleston, SC 29418 (US); BODMANN, Carsten, 71634 Ludwigsburg (DE); STAIB, Edwin, 74223 Flein (DE)
(86) Internationale Anmeldenummer: PCT/EP2017/073828
(87) Internationale Veröffentlichungsnummer: WO 2018/072958

(56) Entgegenhaltungen:
- EP-A1- 1 647 460
- WO-A1-01/00473
- WO-A1-2009/007277
- DE-A1- 10 253 769
- US-A1- 2001 050 347

## Beschreibung

Die vorliegende Erfindung betrifft ein Verfahren zur Herstellung eines Magnetventils zur Steuerung des Bremsdrucks einer Radbremse einer schlupfregelbaren Hydraulikbremsanlage eines Kraftfahrzeugs, mit einem längsbeweglich zumindest teilweise in einem Ventileinsatz angeordneten und mit einem Ventilsitz zusammenwirkenden Ventilelement, das in Einbaulage von einer Federeinrichtung mit einer in Öffnungsrichtung bzgl. des Ventilsitzes wirkenden Kraftkomponente beaufschlagt wird und mittels eines elektromagnetischen Aktuator in Schließrichtung bzgl. des Ventilsitzes betätigbar ist, wobei das Ventilelementes zwischen einem Anker und dem Ventilsitz angeordnet ist und mit dem Anker in Wirkverbindung steht, wobei das Magnetventil wobei eine dem Anker zugewandte Stirnseite des Ventilelements wenigstens einen Vorsprung aufweist, wobei der Vorsprung eine Kontaktstelle mit dem Anker definiert, wobei an der dem Anker (4) zugewandten Stirnseite (6.4) des Ventilelements (6) mehrere Vorsprünge (6.3) ausgebildet sind, **dadurch gekennzeichnet,** eine Oberflächenunebenheit des Ankers (4) oder des Ventilelements(6) ermittelt wird und anhand der ermittelten Oberflächenunebenheit die Höhe der Vorsprünge dimensioniert werden.

### Stand der Technik

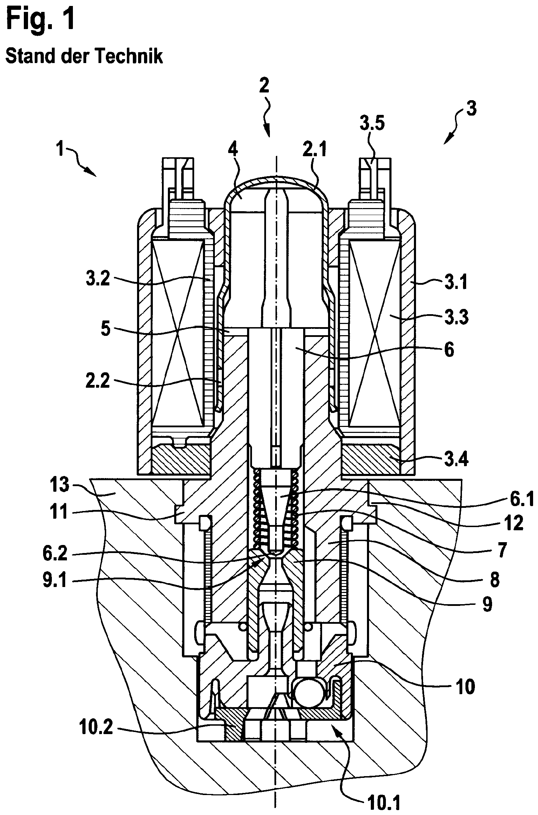

Aus dem Stand der Technik ist beispielsweise die Patentanmeldung DE 10 2007 053 134 A1 bekannt. Diese Schrift betrifft ein Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird. Ein solches ist in Figur 1 dargestellt. Wie aus Figur 1 ersichtlich ist, umfasst das Magnetventil 1, das beispielsweise als stromlos offenes Regelventil ausgeführt ist, eine Magnetbaugruppe 3 zur Erzeugung eines Magnetflusses, die einen Gehäusemantel 3.1, einen Wicklungsträger 3.2, eine Spulenwicklung 3.3 und eine Abdeckscheibe 3.4 umfasst, und eine Ventilpatrone 2, die eine Kapsel 2.1, einen mit einem ersten Ende in die Kapsel 2.1 eingeschobenen Ventileinsatz 8, einen Magnetanker 4 mit einem Ventilelement 6 (auch Stößel genannt) und eine Rückstellfeder 7 umfasst. Bei der Herstellung des Magnetventils 1 werden die Kapsel 2.1 und der Ventileinsatz 8 der Ventilpatrone 2 durch Pressen aufeinander gefügt und durch eine Dichtschweißung 2.2 wird die Ventilpatrone 2 hydraulisch gegenüber der Atmosphäre abgedichtet. Zusätzlich nimmt der Ventileinsatz 8 die im hydraulischen System auftretenden Druckkräfte auf und leitet diese über einen Verstemmflansch 11 an einen Verstemmbereich 12 eines Fluidblocks 13 weiter.

Die Magnetbaugruppe 3 erzeugt durch eine Bestromung der Spulenwicklung 3.3 über elektrischen Anschlüsse 3.5 eine Magnetkraft, die den längsbeweglichen Magnetanker 4 mit dem Ventilelement 6, der ein Schließelement 6.1 mit einem Hauptdichtelement 6.2 umfasst, entgegen der Kraft der Rückstellfeder 7 gegen den Ventileinsatz 8 bewegt, wobei das Ventilelement 6 und die Rückstellfeder 7 in einer Innenbohrung des Ventileinsatzes 2 geführt sind. Der Ventileinsatz 8 leitet den von der Magnetbaugruppe 3 über die Abdeckscheibe 3.4 eingeleiteten Magnetfluss axial über einen Luftspalt 5 in Richtung Magnetanker 4. Zudem nimmt der Ventileinsatz 8 an einem zweiten Ende den so genannten Ventilkörper 9 auf, der einen Hauptventilsitz 9.1 umfasst, in welchen das als Dichtkalotte ausgeführte Hauptdichtelement 6.2 dichtend eintaucht, um die Dichtfunktion des Magnetventils 1 umzusetzen. Wie weiter aus Figur 1 ersichtlich ist, wird an den Ventileinsatz 8 axial ein Ventilunterteil 10 angelegt und abgestützt, das ein exzentrisch zur Ventilhauptachse angeordnetes Rückschlagventil 10.1 umfasst. Das beispielsweise als Kunststoffeinsatz ausgeführte Ventilunterteil 10 dient zusätzlich zur Abdichtung zum umgebenden Fluidblock 13, zur Abdichtung zum Ventilkörper 9 und zur Aufnahme eines Flachfilters 10.2.

Weiterhin ist aus dem Stand der Technik die Patentanmeldung DE 10 2004 030 428 A1 bekannt. Diese Schrift betrifft eine elektromagnetische Ventilvorrichtung. Wenigstens ein Teil des Ventilelementes ist in einem von dem Ventileinsatz im Bereich des Ventilsitzes begrenzten Ventilraum angeordnet. Des Weiteren steht ein dem Ventilraum abgewandtes Ende des Ventilelementes mit einem Anker in Wirkverbindung. Hierbei ist eine dem Ventileinsatz zugewandte Stirnseite des Ankers und/oder eine der Stirnseiten des Ankers zugewandte Stirnseite des Ventileinsatzes mit einem derartigen Oberflächenprofil ausgeführt, dass ein von den Stirnseiten begrenzter Strömungsquerschnitt in radialer Richtung und/oder in Umfangsrichtung des Ankers wenigstens bereichsweise variiert.

Weiterhin ist aus dem Stand der Technik die Patentanmeldung US 2001/050347 A1 bekannt. Diese Schrift betrifft ein Magnetventil. Dieses enthält einen einen Stößel aus magnetisches Material mit einer Endfläche sowie einem beweglichen Teil, wobei an dem Ende des beweglichen Teils ein Vorsprung ausgebildet ist, welcher an der Endfläche des Stößels anliegt.

Weiterhin ist aus dem Stand der Technik die Patentanmeldung DE 102 53 769 A1 bekannt. Diese Schrift betrifft ein Magnetventil, welches dadurch gekennzeichnet ist, dass der Stößel durch eine zwischen seinen beiden Enden verlaufende Bohrung eine rohrförmige, hohle Form aufweist, und dass das im Stößel geführte Schließglied Ausnehmungen aufweist, über welche Druckmittel von der Ventilkammer in die Bohrung des Stößels strömen kann.

Weiterhin ist aus dem Stand der Technik die Patentanmeldung WO 01/00473A1 bekannt. Diese Schrift betrifft ein Elektromagnetventil, mit einem in einem Ventilgehäuse geführten Ventilstößel, der ein Ventilschließglied aufweist, mit einem dem Ventilschließglied zugewandten Ventilsitz-Aufnahmekörper, der mit dem Ventilgehaüse eine eigenständig handhabbare Unterbaugruppe bildet, sowie mit einem den Ventilstößel betätigenden Magnetanker, der mittels einer am Ventilgehäuse angeordneten Ventilspule elektromagnetisch betätigbar ist.

Weiterhin ist aus dem Stand der Technik die Patentanmeldung EP 1 647 460 A1 bekannt. Diese Schrift betrifft ein Elektromagnetventil mit einer Vielzahl von Vorsprüngen welche auf der Oberfläche des Ankers ausgebildet sind, die den Magnetkern berührt.

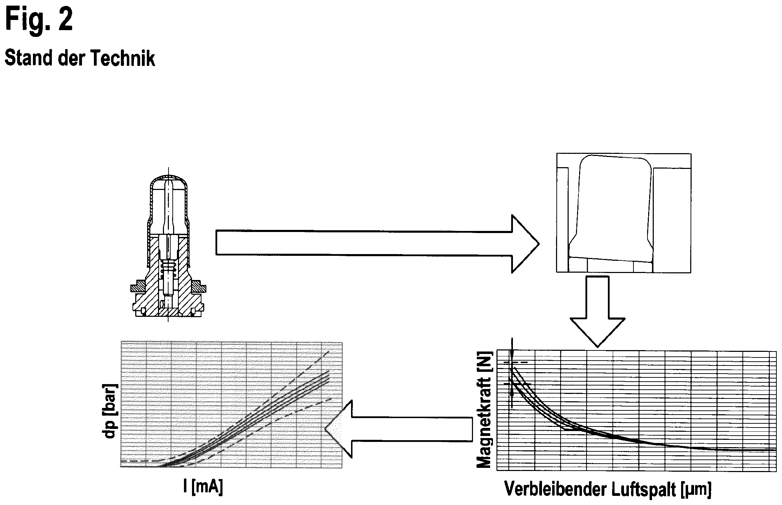

Im Allgemeinen werden die Bauteile Stößel und Anker ungeführt (d.h. mit allen Freiheitsgraden) in das Ventil verbaut. Zudem sind die Bauteile zu einander lose montiert und können somit unterschiedlichste Orientierungen aufweisen. Bei dem Stößel handelt es sich um ein Spritzgussteil, beim Anker um ein kaltumgeformtes Stahlbauteil. Die daraus resultierende Bauteilgenauigkeit (vor allem an Anker, Stößel) beeinflusst die Druckstellgenauigkeit sehr stark. Zudem können unterschiedlichste Bauteilorientierungen zwischen Anker und Stößel zu Schwankungen bei der Druckstellung kommen (wie in Fig. 2 dargestellte), weil sich eine Vielzahl unterschiedlicher Konstellationen zwischen Anker und Stößel einstellen kann und sich somit unterschiedliche Magnetkräfte ergeben.

### Offenbarung der Erfindung

Vorteilhaft ermöglicht hingegen das erfindungsgemäße Verfahren zur Herstellung eines Magnetventils eine Optimierung der Kontaktsituation zwischen Anker und Stößel zur Verbesserung der Genauigkeit des Einlassventils. Ermöglicht wird dies gemäß der Erfindung durch die Merkmale des unabhängigen Patentanspruchs. Weiterbildungen der Erfindung sind in den abhängigen Patentansprüchen angegeben.

Das erfindungsgemäße Verfahren zur Herstellung eines Magnetventils zur Steuerung des Bremsdrucks einer Radbremse einer schlupfregelbaren Hydraulikbremsanlage eines Kraftfahrzeugs, mit einem längsbeweglich zumindest teilweise in einem Ventileinsatz angeordneten und mit einem Ventilsitz zusammenwirkenden Ventilelement, das in Einbaulage von einer Federeinrichtung mit einer in Öffnungsrichtung bzgl. des Ventilsitzes wirkenden Kraftkomponente beaufschlagt wird und mittels eines elektromagnetischen Aktuator in Schließrichtung bzgl. des Ventilsitzes betätigbar ist, wobei das Ventilelementes zwischen einem Anker und dem Ventilsitz angeordnet ist und mit dem Anker in Wirkverbindung steht, ist dadurch gekennzeichnet, dass eine Oberflächenunebenheit des Ankers (4) oder des Ventilelements(6) ermittelt wird und anhand der ermittelten Oberflächenunebenheit die Höhe der Vorsprünge dimensioniert werden.

Hierunter wird verstanden, dass mittels des Vorsprungs an der Stirnseite des Ventilelements (auch Stößel genannt) eine Anlagestelle zwischen dem Ventilelement und dem Anker definiert wird. Der Kontakt zwischen beiden Komponenten ist dadurch klar bestimmt und festgelegt. Weiterhin kann mittels des Vorsprungs als Anlagestelle (sowie zumindest einer weiteren Anlagestelle) auch eine ebene Anlagefläche für den Anker geschaffen werden. Insbesondere ist hierbei von Vorteil, wenn die Anlagefläche des Ankers senkrecht zur gewünschten oder erforderlichen Bewegungsrichtung des Ankers und/oder des Ventilelements ausgebildet ist. Zumeist ist das Ventilelement eng geführt und der Anker lose geführt. Mittels der Ausbildung einer entsprechenden senkrechten Anlagefläche wird ein Verkippen des Ankers bei der Bewegung vermieden.

Die Kontaktstelle ist als Vorsprung der Stirnseite ausgebildet. Als Vorsprung soll jede Art von definierter baulicher Erhebung verstanden werden. Dies kann bspw. in Form eines "Pad" (auch Kontaktpads genannt) erfolgen. Bspw. kann der Vorsprung als Stufe ausgebildet sein. Alternativ sind auch fließende Formen und kontinuierliche Übergänge denkbar. Der Vorsprung kann weiterhin eine ebene Plateaufläche aufweisen. Alternativ kann jedoch auch eine andere Form vorliegen. Das Ventilelement ist insbesondere spritzgegossen und faserverstärkt. Die Herstellung des Vorsprungs kann im Rahmen des Spritzgussprozesses erfolgen. Zur Ausbildung des Vorsprungs ist sowohl eine Materialanhäufung an der Stelle des Vorsprungs als auch eine Vertiefung an anderen Stellen denkbar, so dass sich der Vorsprung hierdurch bildet. Das zur Herstellung des Ventilelements erforderliche Werkzeug ist entsprechend ausgestaltet und weist entsprechende Vertiefungen auf, um den Vorsprung beim Spritzgußprozess auszubilden. Alternativ kann ein Vorsprung auch durch ein anschließendes Bearbeitungsverfahren gebildet werde, bspw. mittels eines spanenden Bearbeitungsprozesses.

Weiterhin sei darauf verwiesen, dass Anker und Ventilelement als zwei separate Bauteile ausgebildet sind. Hierbei ist der Anker ein kaltumgeformtes Stahlbauteil. Hierdurch wird mittels des elektromagnetischen Aktuators insbesondere der Anker aktiviert und betätigt. Das Ventilelement wird daher insbesondere mittels des elektromagnetischen Aktuators über den Anker in Schließrichtung betätigt. Der Anker bewegt sich aktiviert durch den Aktuator und bewegt damit auch das mit dem Anker in Wirkverbindung stehende Ventilelement. Das Ventilelement steht dabei in direktem Kontakt mit dem Anker.

Die Oberfläche der Komponenten besitzt jedoch Unebenheiten, die bspw. produktionsbedingt sind und nur im begrenzten Maße voraus zu bestimmen. Ebenfalls bestehen Bauteilungenauigkeiten. Hierbei kommt es bei einer Neuorientierung der Bauteile (sprich: Drehung im Betrieb) normalerweise zu einer Änderung der Kontaktstellen und dadurch eine Änderung der Druckstellgenauigkeit. Jedoch kann durch den Vorspruch eine definierte Kontaktstelle geschaffen werden. Durch die erfinderische Lösung besteht auch bei einer Neuorientierung der Bauteile eine gleichbleibende Kontaktstelle. Hierdurch wird eine eindeutige Anlagesituation sichergestellt. Hierdurch erfolgt eine Reduzierung der Variation des Ankerverkippens, was wiederum eine Verringerung der Magnetkraftstreuung bewirkt. Durch die erfinderische Lösung wird somit eine höhere Druckstellgenauigkeit des Ventils ermöglicht.

Vorteilhaft ist dabei weiterhin, dass der Vorsprung ohne zusätzlichen Komponenten gebildet werden kann. Die Erzeugung der Kontaktstelle oder der Kontaktstellen kann durch einfache Fertigungsverfahren (bspw. mittels des Spritzgussprozesses), sowie ohne (weitere, bspw. spanende) Bearbeitungsschritte erfolgen.

Durch Anbringung von definierten Kontaktstellen am Ventilelement (Stößel) kann sichergestellt werden, dass sich die Anlagesituation eindeutiger wird. Wenn deren Höhe größer ist als die auftretende Oberflächenunebenheit am Anker (Herstellprozess) ist zudem sichergestellt, dass der Kontakt zwischen Anker und Stößel stets an diesen Punkten auftritt. In Stand der Technik können sich aufgrund der Unebenheiten die Anlagepunkte bei Neuorientierung der Bauteile verändern. Die auftretende Schwankung der Ankerkippwinkel im Betrieb reduziert sich durch die eindeutigere Kontaktsituation.

In einer vorteilhaften Ausführung ist das Verfahren zur Herstellung eines Magnetventils dadurch gekennzeichnet, dass der Vorsprung als unterbrochener Ring ausgebildet ist; oder der Vorsprung als Teilbereich eines ringförmigen Elements ausgebildet ist; oder der Vorsprung punktuell ausgebildet ist.

Hierunter wird verstanden, dass der Vorsprung jegliche geometrische Form annehmen kann, die geeignet ist eine bereichsweise räumliche Distanzierung der Stirnseite des Ventilelements mit der Stirnseite des Ankers zu überbrücken. Hierdurch soll eine ebene Anlagefläche für den Anker geschaffen werden. Dies kann bspw. eine ringförmige Wölbung über einen Teilbereich der Stirnseite des Ventilelements sein. Ebenfalls könnte dies als unterbrochener aufgesetzter Ring ausgebildet sein. Selbstverständlich ist auch ein punktuell ausgebildeter Vorsatz auf der Stirnseite denkbar. Allen Ausführungsformen ist zu eigen, dass der Vorsprung lediglich über einen Teil der (dem Anker zugewandten) Stirnseite ausgebildet ist.

Vorteilhaft eignen sich die beschriebenen Formen, um eine Kontaktstelle mit dem Anker zu definieren. Weiterhin kann hierdurch die Anlagesituation eindeutig definiert werden. Ebenso kann eine geeignete Anlagefläche geschaffen werden, um ein Ankerkippen zu reduzieren und zu vermeiden.

In einer möglichen Ausgestaltung ist das Verfahren zur Herstellung eines Magnetventils dadurch gekennzeichnet, dass mehrere Vorsprünge ausgebildet sind, welche in Umfangsrichtung auf der Stirnseite des Ventilelementes positioniert sind.

Hierunter wird verstanden, dass mehrere Vorsprünge ausgebildet sind. Bspw. können wenigstens zwei Vorsprünge ausgebildet sein. In einer Ausführung sind diese Vorsprünge in Umfangsrichtung auf der Stirnseite des Ventilelements verteilt. In einer alternativen Ausführung kann die Verteilung auch in einer radialen Anordnung oder einer gemischten Anordnung, bspw. sternförmigen Anordnung erfolgen. Diese Vorsprünge definieren die Kontaktstellen zwischen dem Ventilelement und dem Anker. Diese Kontaktstellen stellen eine eindeutige Anlagesituation sicher und vermeiden ein Verkippen des Ankers. Der verbleibende Teil der Stirnseite des Ventilelements gelangt hingegen nicht in Kontakt mit dem Anker. Vorteilhaft kann hierdurch weiterhin eine Verteilung der Krafteinleitung erfolgen. Ebenfalls ist die Positionierung der Vorsprünge an der Stirnseite auf einfache Weise und mit reduziertem zusätzlichem Fertigungsaufwand (bspw. bei der Herstellung des Werkzeugs für den Spritzguss) erzielbar.

In einer bevorzugten Ausführung ist das Verfahren zur Herstellung eines Magnetventils dadurch gekennzeichnet, dass mehrere Vorsprünge ausgebildet sind, welche radial im selben Abstand zur Mittelachse des Ventilelements positioniert sind.

Hierunter wird verstanden, dass die Vorsprünge im Wesentlichen in gleicher Entfernung von der Mittelachse des Ventilelements angeordnet sind. Vorteilhaft kann hierdurch eine eindeutige Kontaktsituation geschaffen werden und ein Verkippen des Ankers auf eine bestimmte Seite reduziert und weitgehend vermieden werden. Weiterhin ergibt sein ein gleichmäßigerer Kraftfluss.

In einer alternativen Weiterbildung ist das Verfahren zur Herstellung eines Magnetventils dadurch gekennzeichnet, dass mehrere Vorsprünge ausgebildet sind, welche auf der Stirnseite des Ventilelements zirkumferentiell voneinander beabstandet positioniert sind.

Hierunter wird verstanden, dass die mehrere Vorsprünge vorhanden sind. Diese können bspw. als Teile einer ringförmigen Erhebung auf der Stirnseite ausgebildet sein. Die jeweiligen Teile (Vorsprünge) überdecken sich jedoch nicht, sondern sind über den Umfang von einander beabstandet. Vorteilhaft ergibt sich dadurch eine Verbesserung der Anlagesituation. Hierdurch wird eine einheitlichere Druckstellgenauigkeit ermöglicht.

In einer vorteilhaften Ausgestaltung ist das Verfahren zur Herstellung eines Magnetventils nach einem der vorhergehenden Ansprüche, dadurch gekennzeichnet, dass mehrere Vorsprünge ausgebildet sind, wobei diese symmetrisch verteilt zur Mittelachse auf der Stirnseite des Ventilelements positioniert sind.

Hierunter wird verstanden, dass die mehreren Vorsprünge bspw. denselben Abstand zur Mittelachse aufweisen, sowie der Abstand zweier benachbarter Vorsprünge gleich ist. Vorzugsweise sind die Vorsprünge gleichmäßig verteilt. Ebenfalls können die Vorsprünge die gleiche Tiefen (bspw. 0,35 mm) und Breiten (bspw. 0,75 mm) aufweisen. Vorteilhaft wird hierdurch eine eindeutige Kontaktsituation ermöglich. Dies erlaubt weiterhin einen gleichmäßigen Kraftfluss und verhindert ein Verkippen des Ankers.

In einer möglichen Ausführung ist das Verfahren zur Herstellung eines Magnetventils dadurch gekennzeichnet, dass mehrere Vorsprünge ausgebildet sind, wobei diese am äußeren Rand der Stirnseite des Ventilelements positioniert sind.

Hierunter wird verstanden, dass die Vorsprünge so positioniert sind, dass diese den weitest möglichen Abstand zur Mittelachse aufweisen. Hierdurch kann vorteilhaft ein Verkippen des Ankers bei einer Bewegung reduziert oder vermieden werden.

In einer bevorzugten Weiterbildung ist das Verfahren zur Herstellung eines Magnetventils dadurch gekennzeichnet, dass drei Vorsprünge ausgebildet sind.

Hierunter wird verstanden, dass exakt drei Vorsprünge an der Stirnseite des Ventilelements definiert sind. Durch die Festlegung auf diese Anzahl kann eine Überbestimmung der Kontaktsituation vermieden werden. Hierdurch wird ein "Kippeln" des Ankers aufgrund der geometrischen Überbestimmung verhindert.

In einer alternativen Ausführung sind jedoch auch vier oder 5 Vorsprünge denkbar.

In einer alternativen Ausführungsform ist das Verfahren zur Herstellung eines Magnetventils dadurch gekennzeichnet, dass an jedem Flügel des Ventilelements jeweils ein Vorsprung ausgebildet ist.

Hierunter wird verstanden, dass das Ventilelement axiale Aussparungen enthält, die bspw. den Fluidfluss positiv beeinflussen, weiterhin verbleiben zwischen den Aussparungen Flügel des Ventilelements, die eine radiale Führung ermöglichen. Bspw. können vier Flügel vorgesehen sein. Durch eine Positionierung der Kontaktstellen an den Flügeln, kann ein geeigneter Abstand der Kontaktstellen von der Mittelachse eingestellt werden. Vorteilhaft kann hierdurch eine Optimierung der Anlagesituation innerhalb der bestehenden Struktur und Geometrie des Ventilelements ermöglicht werden. Dies ermöglicht die beschriebenen Vorteile (insbesondere Reduzierung/Vermeidung Verkippen des Ankers sowie eindeutige Kontaktsituation) ohne Änderung des prinzipiellen aktuellen Designs des Ventilelements.

In einer vorteilhaften Ausgestaltung ist das Verfahren zur Herstellung eines Magnetventils dadurch gekennzeichnet, dass die Höhe der Vorsprünge derart dimensioniert ist, dass diese eine definierte Oberflächenunebenheit ausgleicht, insbesondere eine definierte Oberflächenunebenheit sowie einen zusätzlichen Sicherheitsaufschlag.

Hierunter wird verstanden, dass im Rahmen des Herstellungsprozesses auch Oberflächenunebenheiten am Anker oder Ventilelement auftreten können. Durch eine entsprechend definierte Höhe der Vorsprünge kann diese berücksichtigt und ausgeglichen werden. Hierdurch kann sichergestellt werden, dass der Kontakt zwischen dem Anker und dem Ventilelement an den definierten Kontaktstellen auftritt (und nicht an den nicht definierten Unebenheiten). Die entsprechenden Oberflächenunebenheiten sowie die entsprechende Höhe der Vorsprünge kann bspw. aufgrund Messwerte oder Simulationen ermittelt werden. Bspw. liegt die Höhe eines Vorsprungs bei etwa 0,025 mm bis 0,075 mm, bspw. bei 0,0365 mm oder bei 0,0499 mm. Vorteilhaft erfolgt hiermit eine Sicherstellung der eindeutigen Anlagesituation, sowohl bei regulären Unebenheiten, als auch bei außergewöhnlichen Umständen, bspw. Werkstücken mit bedingtem Fehlermaß.

In einer möglichen Ausgestaltung ist das Verfahren zur Herstellung eines Magnetventils dadurch gekennzeichnet, dass die Fläche der Vorsprünge derart dimensioniert ist, dass diese kleinstmöglich ist sowie eine dauerhafte Beständigkeit bei einem kraftbeaufschlagten Anliegen des Ventilelements an dem Anker gewährleistet.

Hierunter ist zu verstehen, dass die gesamte Flächenpressung auf die vorhandenen in Kontakt stehenden Flächen der Kontaktstellen verteilt wird. Die Fläche, bzw. die Summe der Flächen der definierten Kontaktstellen ist daher so ausgelegt, dass eine definierte Flächenpressung übertragen werden kann. Ein derart kraftbeaufschlagtes Anliegen des Ventilelements an den Anker ergibt sich sowohl aufgrund der Federkraft in Ruhestellung, als auch aufgrund der Federkraft sowie Aktuatorkraft bei einer Bewegung. Weiterhin ist die Fläche derart definiert, dass diese als kleinstmögliche Fläche ausgestaltet ist. Hierdurch kann das Risiko reduziert werden, dass diese auf eine jeweilige Kontaktstelle auf eine Unebenheit bspw. bei der Ankerstirnseite trifft.

Weiterhin ist ein Werkzeug zur Herstellung eines Ventilelements für ein Magnetventil zur Steuerung des Bremsdrucks einer Radbremse einer schlupfregelbaren Hydraulikbremsanlage eines Kraftfahrzeugs, vorgesehen, wobei das Ventilelement längsbeweglich zumindest teilweise in einem Ventileinsatz angeordnet werden und mit einem Ventilsitz zusammenwirken kann, und wobei das Ventilelement in Einbaulage von einer Federeinrichtung mit einer in Öffnungsrichtung bezüglich des Ventilsitzes wirkenden Kraftkomponente beaufschlagbar ist und mittels eines elektromagnetischen Aktuator in Schließrichtung bezüglich des Ventilsitzes betätigbar ist, und wobei das Ventilelement zwischen einem Anker und dem Ventilsitz angeordnet werden kann und wobei das Ventilelement mit dem Anker in Wirkverbindung steht, dadurch gekennzeichnet, dass das Werkzeug eingerichtet ist das Ventilelement derart auszubilden, dass eine dem Anker zugewandte Stirnseite des Ventilelements wenigstens einen Vorsprung aufweist, wobei der Vorsprung eine Kontaktstelle mit dem Anker definiert.

Hierunter wird ein Werkzeug verstanden, welches eingerichtet und ausgebildet ist, ein wie oben beschriebenes Ventilelement zu erzeugen. Als Werkzeug kann bspw. eine Spritzgussform zur Herstellung des Ventilelements verstanden werden. Diese Spritzgussform kann bspw. Aussparungen zur Erzeugung der Vorsprünge der Stirnfläche des Ventilelements aufweisen.

### Ausführungsformen

Es ist darauf hinzuweisen, dass die in der Beschreibung einzeln aufgeführten Merkmale in beliebiger, technisch sinnvoller Weise miteinander kombiniert werden können und weitere Ausgestaltungen der Erfindung aufzeigen. Weitere Merkmale und Zweckmäßigkeit der Erfindung ergeben sich aus der Beschreibung von Ausführungsbeispielen anhand der beigefügten Figuren.

Von den Figuren zeigt:
Fig. 1 eine schematische Schnittansicht eines herkömmlichen Magnetventils; und
Fig. 2 eine schematische Ursachen- und Wirkungskette hinsichtlich der Druckstellgenauigkeit und dem Ankerkippwinkel; und
Fig. 3a eine schematische Ansicht eines Ausführungsbeispiels eines Ventilelements mit ausgebildeten Kontaktstellen in Aufsicht, und
Fig. 3b eine schematische Ansicht eines Ausführungsbeispiels eines Ventilelements mit ausgebildeten Kontaktstellen in Seitenansicht.

In Fig. 1 ist eine schematische Schnittansicht eines herkömmlichen Magnetventils gezeigt. Dieses wurde bereits als Stand der Technik beschrieben.

Fig. 2 zeigt weiterhin schematisch eine Ursachen- und Wirkungskette. Hierbei werden in den Darstellungen links oben mögliche Ungenauigkeiten in den einzelnen Bauteilen dargestellt. Solche Ungenauigkeiten können zu einem Verkippen, bzw. zu einer Schrägstellung des Ankers bspw. hinsichtlich dem Ventileinsatz führen. Dies ist in der Darstellung rechts oben gezeigt. Bei einem Einsatz des Ventils kann es weiterhin zu Drehungen des Ankers und/oder des Ventilelements kommen. Diese führen zu einer variierenden Schrägstellung des Ankers bspw. hinsichtlich dem Ventileinsatz. Variierende Schrägstellungen des Ankers verursachen jedoch eine variierende auf den Anker wirkende Magnetkraft. Dies ist in der Darstellung rechts unten gezeigt. Die variierende auf den Anker wirkende Magnetkraft führt wiederum zu einer unterschiedlichen Strom-/Druck-Charakteristik des Ventils, wie dies in der Darstellung unten links abgebildet ist. Einfache Unebenheiten in den Komponenten verursachen damit unterschiedliche Leistungscharakteristiken bei unterschiedlichen Ventilen - vielmehr sogar werden damit unterschiedliche Charakteristiken bei ein und demselben Ventil während des Betriebs des Ventils erzeugt.

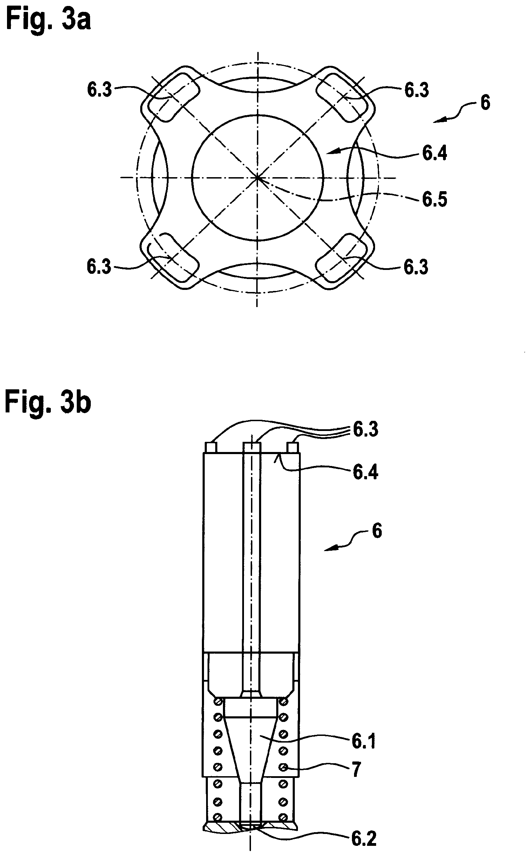

Fig. 3a und Fig. 3b zeigen Ausführungsformen zur Lösung des Problems. Hierbei zeigt Fig. 3a definierte Kontaktstellen 6.3 auf der Stirnseite des Ventilelements 6 in direkten Aufsicht. Die Kontaktstellen 6.3 sind auf der zum Anker 4 weisenden Stirnseite 6.4 des Ventilelements 6 definiert und ausgebildet. Hierbei ist auf jedem Flügel des Ventilelements 6 jeweils eine Kontaktstelle 6.3 ausgebildet. Die Kontaktstellen 6.3 sind am äußeren Rand der Stirnseite 6.4 positioniert, jedoch leicht von der Außenkante abgesetzt. Die Kontaktstellen 6.3 sind in Umfangsrichtung länger als in radialer Richtung. Die radialen Kanten der Kontaktstellen 6.3 sind auf die Mittelachse 6.5 des Ventilelements 6 ausgerichtet.

Fig. 3b zeigt das Ausführungsbeispiel in einer Seitenansicht. Hierbei ist ebenfalls das Ventilelement 6 dargestellt. Man sieht dabei deutlich, dass die ausgebildeten Kontaktstellen 6.3 auf der dem Anker 4 zugewandten Stirnseite 6.4 des Ventilelements 6 angebracht sind. Weiterhin ist auch die Beabstandung der Kontaktstellen 6.3 dargestellt. Die dargestellte Höhe der Kontaktstellen 6.3 dient der verbesserten Erkennung. Weiterhin sind das Schließelement 6.1 sowie das Hauptdichtelement 6.2 und die Federeinrichtung 7 dargestellt.

## Patentansprüche

1. Verfahren zur Herstellung eines Magnetventils (1) zur Steuerung eines Bremsdrucks einer Radbremse einer schlupfregelbaren Hydraulikbremsanlage eines Kraftfahrzeugs,
mit einem längsbeweglich zumindest teilweise in einem Ventileinsatz (8) angeordneten und mit einem Ventilsitz (9.1) zusammenwirkenden Ventilelement (6), das in Einbaulage von einer Federeinrichtung (7) mit einer in Öffnungsrichtung bzgl. des Ventilsitzes (9.1) wirkenden Kraftkomponente beaufschlagt wird und mittels eines elektromagnetischen Aktuators (3) in Schließrichtung bzgl. des Ventilsitzes (9.1) betätigbar ist,
wobei das Ventilelementes (6) zwischen einem Anker (4) und dem Ventilsitz (9.1) angeordnet ist und mit dem Anker (4) in Wirkverbindung steht,
**wobei** eine dem Anker (4) zugewandte Stirnseite (6.4) des Ventilelements wenigstens einen Vorsprung (6.3) aufweist, wobei der Vorsprung (6.3) eine Kontaktstelle mit dem Anker (4) definiert, wobei an der dem Anker (4) zugewandten Stirnseite (6.4) des Ventilelements (6) mehrere Vorsprünge (6.3) ausgebildet sind, **dadurch gekennzeichnet, dass** eine Oberflächenunebenheit des Ankers (4) oder des Ventilelements(6) ermittelt wird und anhand der ermittelten Oberflächenunebenheit die Höhe der Vorsprünge dimensioniert werden.

2. Verfahren zur Herstellung eines Magnetventils (1) nach Anspruch 1, **dadurch gekennzeichnet, dass**
- der Vorsprung (6.3) als unterbrochener Ring ausgebildet ist; oder
- der Vorsprung (6.3) als Teilbereich eines ringförmigen Elements ausgebildet ist; oder
- der Vorsprung (6.3) punktuell ausgebildet ist.

3. Verfahren zur Herstellung eines Magnetventils (1) nach einem der vorhergehenden Ansprüche, **dadurch gekennzeichnet, dass** mehrere Vorsprünge (6.3) ausgebildet sind, welche in Umfangsrichtung auf der Stirnseite (6.4) des Ventilelementes (6) positioniert sind.

4. Verfahren zur Herstellung eines Magnetventils (1) nach einem der vorhergehenden Ansprüche, **dadurch gekennzeichnet, dass** mehrere Vorsprünge (6.3) ausgebildet sind, welche radial im selben Abstand zur Mittelachse (6.5) des Ventilelements (6) positioniert sind.

5. Verfahren zur Herstellung eines Magnetventils (1) nach einem der vorhergehenden Ansprüche, **dadurch gekennzeichnet, dass** mehrere Vorsprünge (6.3) ausgebildet sind, welche auf der Stirnseite (6.4) des Ventilelements (6) zirkumferentiell voneinander beabstandet positioniert sind.

6. Verfahren zur Herstellung eines Magnetventils (1) nach einem der vorhergehenden Ansprüche, **dadurch gekennzeichnet, dass** mehrere Vorsprünge (6.3) ausgebildet sind, wobei diese symmetrisch verteilt zur Mittelachse (6.5) auf der Stirnseite (6.4) des Ventilelements (6) positioniert sind.

7. Verfahren zur Herstellung eines Magnetventils (1) nach einem der vorhergehenden Ansprüche, **dadurch gekennzeichnet, dass** mehrere Vorsprünge (6.3) ausgebildet sind, wobei diese am äußeren Rand der Stirnseite (6.4) des Ventilelements (6) positioniert sind.

8. Verfahren zur Herstellung eines Magnetventils (1) nach einem der vorhergehenden Ansprüche, **dadurch gekennzeichnet, dass** drei Vorsprünge (6.3) ausgebildet sind.

9. Verfahren zur Herstellung eines Magnetventils (1) nach einem der vorhergehenden Ansprüche, **dadurch gekennzeichnet, dass** das Ventilelement (6) mehrere Flügel zur radialen Führung des Ventilelements (6) aufweist, wobei an jedem Flügel des Ventilelements (6) jeweils ein Vorsprung (6.3) ausgebildet ist.

10. Verfahren zur Herstellung eines Magnetventils (1) nach einem der vorhergehenden Ansprüche, **dadurch gekennzeichnet, dass** die Höhe des Vorsprungs (6.3) derart dimensioniert ist, dass diese eine ermittelte Oberflächenunebenheit des Ankers (4) oder des Ventilelements (6) sowie einen zusätzlichen Sicherheitsaufschlag ausgleicht.

11. Verfahren zur Herstellung eines Magnetventils (1) nach einem der vorhergehenden Ansprüche, **dadurch gekennzeichnet, dass** die Fläche des Vorsprungs (6.3) derart dimensioniert ist, dass diese eine dauerhafte Beständigkeit bei einem kraftbeaufschlagten Anliegen des Ventilelements (6) an dem Anker (4) gewährleistet und nicht größer ist als notwendig um eine dauerhafte Beständigkeit bei einem kraftbeaufschlagten Anliegen des Ventilelements (6) an dem Anker (4) zu gewährleisten.

12. Magnetventil (1) zur Steuerung eines Bremsdrucks einer Radbremse einer schlupfregelbaren Hydraulikbremsanlage eines Kraftfahrzeugs, mit einem längsbeweglich zumindest teilweise in einem Ventileinsatz (8) angeordneten und mit einem Ventilsitz (9.1) zusammenwirkenden Ventilelement (6), das in Einbaulage von einer Federeinrichtung (7) mit einer in Öffnungsrichtung bzgl. des Ventilsitzes (9.1) wirkenden Kraftkomponente beaufschlagt wird und mittels eines elektromagnetischen Aktuators (3) in Schließrichtung bzgl. des Ventilsitzes (9.1) betätigbar ist, wobei das Ventilelementes (6) zwischen einem Anker (4) und dem Ventilsitz (9.1) angeordnet ist und mit dem Anker (4) in Wirkverbindung steht, wobei eine dem Anker (4) zugewandte Stirnseite (6.4) des Ventilelements wenigstens einen Vorsprung (6.3) aufweist, wobei der Vorsprung (6.3) eine Kontaktstelle mit dem Anker (4) definiert, wobei an der dem Anker (4) zugewandten Stirnseite (6.4) des Ventilelements (6) mehrere Vorsprünge (6.3) ausgebildet sind, **dadurch gekennzeichnet, dass** das Magnetventil (1) durch ein Verfahren nach einem der vorhergehenden Ansprüche hergestellt worden ist, wobei zumindest eine Oberflächenunebenheit des Ankers (4) oder des Ventilelements(6) ermittelt worden ist und anhand der ermittelten Oberflächenunebenheit die Höhe der Vorsprünge dimensioniert worden ist.

## Claims

1. Method for producing a solenoid valve (1) for controlling a braking pressure of a wheel brake of a slip-controllable hydraulic brake system of a motor vehicle,
having a valve element (6) which is arranged at least partially in a valve insert (8) in a longitudinally displaceable manner and cooperates with a valve seat (9.1), and which in the installed position is loaded with a force component acting in the opening direction relative to the valve seat (9.1) by a spring device (7), and can be actuated by means of an electromagnetic actuator (3) in the closing direction relative to the valve seat (9.1),
wherein the valve element (6) is arranged between an armature (4) and the valve seat (9.1) and is operatively connected to the armature (4),
wherein an end face (6.4) of the valve element facing the armature (4) has at least one protrusion (6.3), wherein the protrusion (6.3) defines a point of contact with the armature (4), wherein several protrusions (6.3) are formed on the end face (6.4) of the valve element (6) facing the armature (4), **characterized in that** a surface unevenness of the armature (4) or of the valve element (6) is determined and the height of the protrusions are dimensioned on the basis of the determined surface unevenness.

2. Method for producing a solenoid valve (1) according to Claim 1, **characterized in that**
- the protrusion (6.3) is formed as an interrupted ring; or
- the protrusion (6.3) is formed as a part region of an annular element; or
- the protrusion (6.3) is formed in punctiform fashion.

3. Method for producing a solenoid valve (1) according to either of the preceding claims, **characterized in that** several protrusions (6.3) are formed which are positioned in the circumferential direction on the end face (6.4) of the valve element (6).

4. Method for producing a solenoid valve (1) according to any of the preceding claims, **characterized in that** several protrusions (6.3) are formed which are positioned radially at the same distance from the central axis (6.5) of the valve element (6).

5. Method for producing a solenoid valve (1) according to any of the preceding claims, **characterized in that** several protrusions (6.3) are formed which are positioned spaced apart from each other circumferentially on the end face (6.4) of the valve element (6).

6. Method for producing a solenoid valve (1) according to any of the preceding claims, **characterized in that** several protrusions (6.3) are formed, wherein these are positioned on the end face (6.4) of the valve element (6) so as to be symmetrically distributed relative to the central axis (6.5).

7. Method for producing a solenoid valve (1) according to any of the preceding claims, **characterized in that** several protrusions (6.3) are formed, wherein these are positioned on the outer edge of the end face (6.4) of the valve element (6).

8. Method for producing a solenoid valve (1) according to any of the preceding claims, **characterized in that** three protrusions (6.3) are formed.

9. Method for producing a solenoid valve (1) according to any of the preceding claims, **characterized in that** the valve element (6) has multiple fins for the radial guidance of the valve element (6), wherein in each case one protrusion (6.3) is formed on each fin of the valve element (6).

10. Method for producing a solenoid valve (1) according to any of the preceding claims, **characterized in that** the height of the protrusion (6.3) is dimensioned so as to compensate for a determined surface unevenness of the armature (4) or of the valve element (6) and an additional safety allowance.

11. Method for producing a solenoid valve (1) according to any of the preceding claims, **characterized in that** the area of the protrusion (6.3) is dimensioned so as to ensure a permanent resistance to a force-loaded abutment of the valve element (6) against the armature (4) and so as to be no higher than is necessary to ensure a permanent resistance to a force-loaded abutment of the valve element (6) against the armature (4).

12. Solenoid valve (1) for controlling a braking pressure of a wheel brake of a slip-controllable hydraulic brake system of a motor vehicle, having a valve element (6) which is arranged at least partially in a valve insert (8) in a longitudinally displaceable manner and cooperates with a valve seat (9.1), and which in the installed position is loaded with a force component acting in the opening direction relative to the valve seat (9.1) by a spring device (7), and can be actuated by means of an electromagnetic actuator (3) in the closing direction relative to the valve seat (9.1), wherein the valve element (6) is arranged between an armature (4) and the valve seat (9.1) and is operatively connected to the armature (4), wherein an end face (6.4) of the valve element facing the armature (4) has at least one protrusion (6.3), wherein the protrusion (6.3) defines a point of contact with the armature (4), wherein several protrusions (6.3) are formed on the end face (6.4) of the valve element (6) facing the armature (4), **characterized in that** the solenoid valve (1) has been produced by means of a method according to any one of the preceding claims, wherein at least one surface unevenness of the armature (4) or of the valve element (6) has been determined and the height of the protrusions has been dimensioned on the basis of the determined surface unevenness.

## Revendications

1. Procédé de fabrication d'une électrovanne (1) destinée à commander une pression de freinage d'un frein de roue d'un système de freinage hydraulique à glissement régulable d'un véhicule automobile, ladite électrovanne comprenant
un élément de vanne (6) qui est disposé au moins partiellement dans un insert de vanne (8) de manière mobile longitudinalement, qui coopère avec un siège de vanne (9.1), qui est sollicité, en position de montage, par un moyen à ressort (7) dont une composante de force agit en le sens d'ouverture du siège de vanne (9.1) et qui peut être actionné à l'aide d'un actionneur électromagnétique (3) dans le sens de fermeture du siège de vanne (9.1),
l'élément de vanne (6) étant disposé entre un induit (4) et le siège de vanne (9.1) et étant en liaison fonctionnelle avec l'induit (4),
un côté frontal (6.4), dirigé vers l'induit (4), de l'élément de vanne comportant au moins une saillie (6.3), la saillie (6.3) définissant un point de contact avec l'induit (4), plusieurs saillies (6.3) étant formées sur le côté frontal (6.4), dirigé vers l'induit (4), de l'élément de vanne (6), **caractérisé en ce qu'**une irrégularité de surface de l'induit (4) ou de l'élément de vanne (6) est déterminée et la hauteur des saillies sont dimensionnée sur la base de l'irrégularité de surface déterminée.

2. Procédé de fabrication d'une électrovanne (1) selon la revendication 1,
**caractérisé en ce que**
- la saillie (6.3) est conçue comme une bague interrompue ; ou
- la saillie (6.3) est conçue comme une zone d'un élément annulaire ; ou
- la saillie (6.3) a une formation ponctuelle.

3. Procédé de fabrication d'une électrovanne (1) selon l'une des revendications précédentes, **caractérisé en ce que** plusieurs saillies (6.3) sont formées qui sont positionnées dans la direction circonférentielle sur le côté frontal (6.4) de l'élément de vanne (6).

4. Procédé de fabrication d'une électrovanne (1) selon l'une des revendications précédentes, **caractérisé en ce que** plusieurs saillies (6.3) sont formées qui sont positionnées radialement à la même distance de l'axe central (6.5) de l'élément de vanne (6).

5. Procédé de fabrication d'une électrovanne (1) selon l'une des revendications précédentes, **caractérisé en ce que** plusieurs saillies (6.3) sont formées qui sont positionnées circonférentiellement à distance les unes des autres sur le côté frontal (6.4) de l'élément de vanne (6).

6. Procédé de fabrication d'une électrovanne (1) selon l'une des revendications précédentes, **caractérisé en ce que** plusieurs saillies (6.3) sont formées, celles-ci étant positionnées en étant réparties symétriquement par rapport à l'axe central (6.5) sur le côté frontal (6.4) de l'élément de vanne (6).

7. Procédé de fabrication d'une électrovanne (1) selon l'une des revendications précédentes, **caractérisé en ce que** plusieurs saillies (6.3) sont formées, celles-ci étant positionnées sur le bord extérieur du côté frontal (6.4) de l'élément de vanne (6).

8. Procédé de fabrication d'une électrovanne (1) selon l'une des revendications précédentes, **caractérisé en ce que** trois saillies (6.3) sont formées.

9. Procédé de fabrication d'une électrovanne (1) selon l'une des revendications précédentes, **caractérisé en ce que** l'élément de vanne (6) comporte plusieurs ailettes destinées au guidage radial de l'élément de vanne (6), une saillie (6.3) étant formée sur chaque ailette de l'élément de vanne (6).

10. Procédé de fabrication d'une électrovanne (1) selon l'une des revendications précédentes, **caractérisé en ce que** la hauteur de la saillie (6.3) est dimensionnée de manière à présenter une irrégularité de surface déterminée de l'induit (4) ou de l'élément de vanne (6) et compenser une augmentation de sécurité supplémentaire.

11. Procédé de fabrication d'une électrovanne (1) selon l'une des revendications précédentes, **caractérisé en ce que** la surface de la saillie (6.3) est dimensionnée de manière à garantir une résistance permanente lorsque l'élément de vanne (6) est en appui sur l'induit (4) sous l'effet de la force et à ne pas être supérieure à ce qui est nécessaire pour garantir une résistance permanente lorsque l'élément de vanne (6) est en appui sur l'induit (4) sous l'effet de la force.

12. Électrovanne (1) destinée à commander une pression de freinage d'un frein de roue d'un système de freinage hydraulique à glissement régulable d'un véhicule automobile, ladite électrovanne comprenant un élément de vanne (6) qui est disposé au moins partiellement dans un insert de vanne (8) de manière mobile longitudinalement, qui coopère avec un siège de vanne (9.1), qui est sollicité, en position de montage, par un moyen à ressort (7) dont une composante de force agit dans le sens d'ouverture du siège de vanne (9.1) et qui peut être actionné à l'aide d'un actionneur électromagnétique (3) dans le sens de fermeture du siège de vanne (9.1), l'élément de vanne (6) étant disposé entre un induit (4) et le siège de vanne (9.1) et étant en liaison fonctionnelle avec l'induit (4), un côté frontal (6.4), dirigé vers l'induit (4), de l'élément de vanne comportant au moins une saillie (6.3), la saillie (6.3) définissant un point de contact avec l'induit (4), plusieurs saillies (6.3) étant formées sur le côté frontal (6.4), dirigé vers l'induit (4), de l'élément de vanne (6), **caractérisée en ce que** l'électrovanne a été fabriquée selon l'une des revendications précédentes, au moins une irrégularité de surface de l'induit (4) ou de l'élément de vanne (6) étant déterminée et la hauteur des saillies ayant été dimensionnée sur la base de l'irrégularité de surface déterminée.
